# FASCICULE DE BREVET EUROPEEN

(11) **EP 4 556 311 B1**
(45) Date de publication et mention de la délivrance du brevet: **13.05.2026**
(21) Numéro de dépôt: 24212998.9
(22) Date de dépôt: 14.11.2024
(51) Int. Cl.: B60P 3/20, F25D 23/06

(54) **DISPOSITIF DE PARTITIONNEMENT AVEC BARRE D'ARRIMAGE POUR UNE CARROSSERIE FRIGORIFIQUE**
PARTITIONIERUNGSVORRICHTUNG MIT EINEM BEFESTIGUNGSSTAB FÜR EINE KÜHLKAROSSERIE
PARTITIONING DEVICE WITH TIE-DOWN BAR FOR A REFRIGERATED BODY

(30) Priorité: 17.11.2023 FR 2312639
(43) Date de publication de la demande: 21.05.2025
(73) Titulaire: Lamberet, 01380 Saint-Cyr-sur-Menthon (FR)
(72) Inventeur: GRANGER, Fabien, 01851 MARBOZ (FR); GUILLERMIN, Nicolas, 01400 CHANOZ-CHÂTENAY (FR); TUET, Gwénaël, 01000 BOURG EN BRESSE (FR); DUGAS, Frédéric, 01250 MONTAGNAT (FR)
(74) Mandataire: Germain Maureau

(56) Documents cités:
- EP-B1- 3 699 027
- US-A- 2 715 040
- US-A- 4 880 342
- US-A- 5 265 993

## Description

### Domaine Technique

La présente invention concerne un dispositif de partitionnement longitudinal pour une carrosserie frigorifique, notamment pour une carrosserie frigorifique de véhicule automobile ou de remorque de véhicule automobile. L'invention concerne aussi une remorque pour un véhicule automobile, notamment pour un camion, comportant une caisse frigorifique équipée d'au moins un dispositif de partitionnement.

### Arrière-plan technique

On connait des dispositifs de partitionnement pour véhicule frigorifique qui permettent de délimiter dans une même carrosserie frigorifique, que ce soit une carrosserie frigorifique posée sur un camion porteur ou sur une semi-remorque, des zones distinctes, qui peuvent éventuellement être dirigées sous des températures différentes. Un dispositif de partitionnement dispose typiquement d'une cloison mobile entre une position verticale dans la carrosserie et une position relevée dans laquelle la cloison est par exemple rabattue vers le haut contre un plafond de la carrosserie frigorifique.

Le document EP-3.825.180-A1 décrit un dispositif de partitionnement perfectionné présentant de nombreux avantages. Notamment, la cloison de partitionnement présente, au niveau d'un bord supérieur de la cloison, un mécanisme d'ancrage de la cloison dans une multitude de positions longitudinales dans la carrosserie. Par ailleurs, ce document décrit un dispositif de partitionnement dans lequel la cloison comporte deux panneaux juxtaposés transversalement, qui sont chacun escamotables indépendamment l'un de l'autre par pivotement autour de l'axe supérieur transversal d'escamotage entre une position de service verticale et une position relevée.

On connait par ailleurs des barres d'arrimage pour former, dans le volume de chargement d'une carrosserie d'un camion ou d'une remorque pour camion, un appui solide pour arrimer des charges dans le volume de chargement, et/ou pour bloquer le déplacement des charges dans le volume de chargement selon la direction longitudinale. Une barre d'arrimage est prévue pour être fixée de manière amovible en une position longitudinale en travers du volume de chargement. Pour cela, la barre d'arrimage comporte deux extrémités d'arrimage qui sont munies chacune d'un organe d'arrimage sur une paroi latérale de la carrosserie rigide. Il est connu de munir les deux parois latérales internes opposées d'une carrosserie rigide chacune d'un profilé longitudinal comprenant une multitude de moyens d'arrimage complémentaires des organes d'arrimage de la barre d'arrimage, répartis sur la longueur du rail. De tels profilés en vis-à-vis permettent de fixer de manière amovible une barre d'arrimage en différentes positions longitudinales dans le volume de chargement, en fonction du chargement à arrimer. Généralement, pour décharger une remorque, il est nécessaire de décrocher la barre d'arrimage. A la fin du déchargement, il arrive que la barre d'arrimage soit oubliée sur le quai de chargement. EP-3.699.027, US-4.880.342, US-2.715040 et US-5.265.993 décrivent des systèmes selon l'art antérieur.

L'invention a pour objet de proposer un dispositif de partitionnement amélioré, qui facilite le travail de chargement du chargement et déchargement d'un véhicule frigorifique, pour promouvoir à la fois la sécurité du chargement et le respect des conditions de température de transport de la marchandise.

### Exposé de l'invention

L'invention propose un dispositif de partitionnement longitudinal pour une carrosserie frigorifique, du type comportant au moins une cloison de partitionnement ayant, au niveau d'un bord supérieur de la cloison, un mécanisme d'ancrage de la cloison dans une multitude de positions longitudinales dans la carrosserie, et la cloison étant escamotable par pivotement de la cloison autour d'un axe supérieur transversal d'escamotage entre une position de service verticale et une position relevée.

Le dispositif comporte une barre d'arrimage qui est en une ou plusieurs parties, et qui est fixée sur la cloison par un mécanisme de basculement qui permet le déplacement de la barre d'arrimage entre une position de stockage et une position d'arrimage par rapport à la cloison. La barre d'arrimage est ainsi toujours à disposition. Par ailleurs, en étant fixée sur la cloison, elle assure, en position d'arrimage, un arrimage de la cloison par rapport à son axe supérieur transversal d'escamotage.

Dans certains modes de réalisation, le mécanisme de basculement détermine un déplacement de la barre d'arrimage, entre ses positions d'arrimage et de stockage, qui est parallèle à un plan général de la cloison. Cela permet un encombrement minimal pour l'ensemble, et une manipulation aisée de la barre d'arrimage entre ses positions de stockage et d'arrimage.

Dans certains modes de réalisation, en position d'arrimage, la barre d'arrimage est horizontale, et, en position de stockage, la barre d'arrimage est inclinée par rapport à l'horizontale d'un angle de stockage qui est compris dans la gamme allant de 15 degrés à 90 degrés. Cela permet à la barre d'arrimage, en position de stockage, de ne pas dépasser transversalement de la cloison. L'encombrement est donc réduit.

Dans certains modes de réalisation, la barre d'arrimage comporte deux extrémités d'arrimage qui sont munies chacune d'un organe d'arrimage sur une paroi latérale de la carrosserie frigorifique. L'arrimage sur les parois permet d'une part à la barre de former un point d'arrimage solide pour la cargaison, et d'autre part, la barre état par ailleurs solidaire de la cloison, elle permet d'arrimer solidement la cloison, en bloquant toute rotation de la cloison autour de son axe d'escamotage.

Dans certains modes de réalisation, le mécanisme de basculement comporte une articulation par laquelle la barre d'arrimage est articulée sur la cloison autour d'un axe de rotation perpendiculaire à la cloison. Un tel mode de réalisation est simple et peu couteux à mettre en œuvre.

Dans certains modes de réalisation, le mécanisme de basculement comporte au moins un point de liaison coulissant entre la barre et la cloison, décalé de l'axe de rotation de la barre. Dans certains modes de réalisation, le point de liaison coulissant du mécanisme de basculement comporte une glissière en arc de cercle autour de l'axe de rotation et une griffe qui est retenue par la glissière selon au moins un sens dans la direction perpendiculaire à la cloison et qui peut coulisser dans la glissière selon l'arc de cercle autour de l'axe de rotation. La glissière peut être solidaire de l'une parmi la cloison et la barre, tandis que la griffe peut être solidaire de l'autre parmi la cloison et la barre.

Dans certains modes de réalisation, la cloison comporte deux panneaux juxtaposés transversalement, qui sont chacun escamotables indépendamment l'un de l'autre par pivotement autour de l'axe supérieur transversal d'escamotage entre une position de service verticale et une position relevée. Dans un tel cas, la barre d'arrimage peut comporter une première demi-barre qui est fixée sur un premier des deux panneaux par un premier mécanisme de basculement qui permet le déplacement de la première demi-barre entre une position de stockage et une position d'arrimage par rapport au premier panneau, et une deuxième demi-barre qui est fixée sur le deuxième panneau par un deuxième mécanisme de basculement qui permet le déplacement de la deuxième demi-barre entre une position de stockage et une position d'arrimage par rapport au deuxième panneau. Chaque demi-barre peut comporter une extrémité médiale et une extrémité latérale, l'extrémité latérale pouvant être munie d'un organe d'arrimage sur une paroi latérale de la carrosserie frigorifique, l'extrémité latérale formant ainsi une extrémité d'arrimage de la barre d'arrimage. La réalisation de la barre d'arrimage en plusieurs parties permet de diminuer le poids de chaque partie, ce qui simplifie les manœuvres d'escamotage des panneaux autour de l'axe supérieur transversal d'escamotage. Cela permet aussi à chaque partie de barre d'être aisément comprise, en position de stockage, dans l'encombrement transversal du panneau considéré.

Dans certains modes de réalisation, le mécanisme de basculement d'une demi barre détermine un déplacement de la demi-barre, entre ses positions d'arrimage et de stockage, qui est parallèle à un plan général du panneau correspondant. Cela permet un encombrement minimal pour l'ensemble, et une manipulation aisée de la demi-barre entre ses positions de stockage et d'arrimage.

Dans certains modes de réalisation, le mécanisme de basculement d'une demi barre comporte une articulation par laquelle la demi-barre est articulée sur le panneau correspondant autour d'un axe de rotation perpendiculaire au panneau correspondant. Un tel mode de réalisation est simple et peu couteux à mettre en œuvre.

Dans certains modes de réalisation, le mécanisme de basculement d'une demi barre comporte au moins un point de liaison coulissant entre la demi-barre et le panneau correspondant de la cloison, décalé de l'axe de rotation de la demi-barre. Cela permet de limiter le risque d'arrachement de la demi-barre par rapport au panneau. Le mécanisme de basculement peut ainsi comporter une glissière en arc de cercle autour de l'axe de rotation et une griffe qui est retenue par la glissière selon au moins un sens dans la direction perpendiculaire au panneau et qui peut coulisser dans la glissière selon l'arc de cercle autour de l'axe de rotation, la glissière étant solidaire de l'un parmi le panneau et la demi-barre, tandis que la griffe est solidaire de l'autre parmi le panneau et la demi-barre. Une telle conception est simple et fiable.

Dans certains modes de réalisation, la demi-barre présente un centre de gravité qui est plus proche de l'axe supérieur transversal d'escamotage lorsque la demi-barre est en position de stockage que lorsqu'elle est en position d'arrimage. Cela permet de simplifier l'escamotage du panneau correspondant.

Dans certains modes de réalisation, l'axe de rotation de la demi-barre est décalé le long de la demi-barre en direction d'une extrémité latérale de la demi-barre.

Dans certains modes de réalisation, le dispositif comporte des moyens de verrouillage des extrémités médiales des demi-barres en position d'arrimage, verrouillant la rotation des demi-barres en position d'arrimage.

Dans certains modes de réalisation, le dispositif comporte des moyens d'encastrement mutuel des extrémités médiales des demi-barres en position d'arrimage, permettant ainsi de réaliser, à moins coût, une barre en plusieurs parties ayant des propriétés de résistance équivalentes à celles d'une barre en une seule partie.

Dans certains modes de réalisation, le dispositif comporte un organe de rappel de la demi-barre vers sa position de stockage, permettant ainsi de lui donner une position stable. Les moyens de rappel peuvent aussi faciliter la manipulation de la demi-barre, par exemple si celle-ci présente un centre de gravité décalé de son axe de rotation.

Dans certains modes de réalisation, l'articulation comporte une laxité selon l'axe de rotation, permettant de limiter les risque d'arrachement de la barre par rapport à la cloison.

L'invention concerne aussi une carrosserie frigorifique comprenant au moins dispositif de partitionnement ayant au moins l'une des caractéristiques énoncées ci-dessus. Une telle carrosserie frigorifique peut par exemple faire partie d'un véhicule automobile ou d'une remorque de véhicule automobile.

L'invention concerne aussi une remorque pour un véhicule automobile, la remorque comportant une caisse frigorifique ayant au moins un dispositif de partitionnement ayant au moins l'une des caractéristiques énoncées ci-dessus.

.

### Brève description des dessins

[Fig. 1] : La Figure 1 est une vue d'un véhicule routier comprenant un camion tracteur et une semi-remorque.
[Fig. 2] : La Figure 2 est une vue schématique en plan d'un premier exemple d'un dispositif de partitionnement comportant une barre d'arrimage, représenté en position de stockage de la barre d'arrimage.
[Fig. 3] : La Figure 3 est une vue similaire à celle de la Figure 2, illustrant le premier exemple, en position d'arrimage de la barre d'arrimage.
[Fig. 4] : La Figure 4 est une vue schématique en perspective d'un deuxième exemple d'un dispositif de partitionnement, représenté en position d'arrimage de la barre d'arrimage.
[Fig. 5] : La Figure 5 est une vue schématique en plan du deuxième exemple, représenté en position de stockage de la barre d'arrimage.
[Fig. 6] : La Figure 6 est une vue du deuxième exemple, similaire à celle de la Figure 5, la barre d'arrimage étant en position d'arrimage, avant verrouillage des extrémités médiales.
[Fig. 7] : La Figure 7 est une vue du deuxième exemple, similaire à celle de la Figure 6, la barre d'arrimage étant en position d'arrimage, après verrouillage des extrémités médiales.
[Fig. 8] : La Figure 8 est une vue partielle, en perspective depuis le bas, avec arrachement partiel, du deuxième mode de réalisation.
[Fig. 9] : La Figure 9 est une vue schématique et partielle, en perspective, d'un troisième exemple d'un dispositif de partitionnement, représenté dans une position intermédiaire de la barre d'arrimage.
[Fig. 10] : La Figure 10 est une vue en perspective éclatée d'une partie d'une barre d'arrimage conforme à celle du troisième exemple.
[Fig. 11] : La Figure 11 est une vue en coupe par un plan transversal montrant l'extrémité latérale d'une barre d'arrimage et son arrimage à la carrosserie, dans une version conforme à celle du troisième exemple.
[Fig. 12] : La Figure 12 est une vue en perspective d'une demi-barre et de son mécanisme de basculement.

### Description détaillée

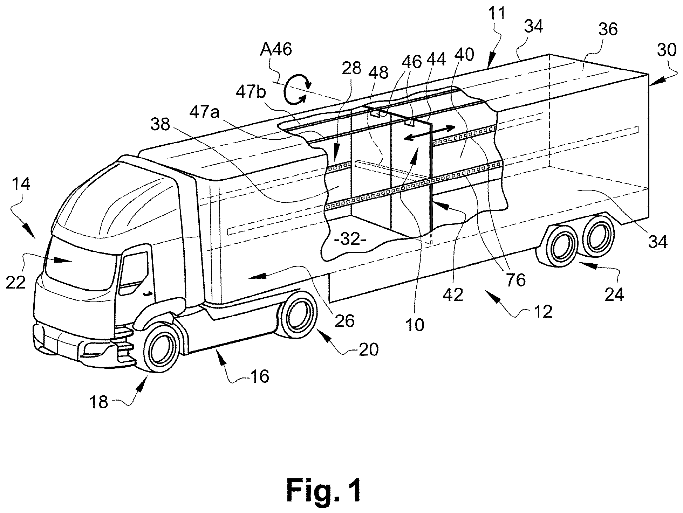

La figure 1 montre un dispositif de partitionnement 10 d'une carrosserie frigorifique 11, dans un exemple dans lequel la carrosserie frigorifique fait partie d'une remorque 12 de véhicule automobile.

Dans cet exemple, la carrosserie frigorifique 11 est celle d'une semi-remorque 12, destinée à être remorquée par un camion tracteur 14. De manière connue, le camion tracteur 14 comporte un châssis 16 ayant au moins un essieu avant 18 et un essieu arrière 20. La partie avant porte une cabine 22 abritant le poste de conduite du camion tracteur 14. La partie arrière du châssis 16, longitudinalement en arrière de la cabine 22, comporte un attelage (non visible) de type « sellette ». La semi-remorque 12 comporte un châssis qui comporte un ou plusieurs essieux arrière 24, mais, s'agissant d'une semi-remorque, pas d'essieu avant. La partie avant 26 de la semi-remorque 12 chevauche la partie arrière du châssis du camion tracteur 14 et est articulée sur la sellette. Cependant, dans d'autres exemples, la carrosserie frigorifique pourrait être posée sur le châssis d'un camion porteur, ou pourrait être intégrée dans tout autre type de véhicule automobile.

La carrosserie frigorifique 11 délimite un volume de chargement 28 destiné à accueillir de la marchandise. Ce volume de chargement 28 est généralement accessible depuis une face arrière 30 de la semi-remorque, généralement équipée d'une porte, par exemple une porte à deux battants ou une porte à volet roulant. Ce volume de chargement 28 est de préférence parallélépipédique, avec une direction longitudinale qui est celle du véhicule, une direction verticale, et une direction transversale perpendiculaire aux directions longitudinales et verticales La carrosserie frigorifique 11 comprend, de façon conventionnelle, un plancher 32, de préférence horizontal, des parois latérales 34, de préférence longitudinales et verticales, et un plafond 36, de préférence horizontal lui aussi. De préférence, les parois latérales 34 sont réalisées en matériaux isothermes de manière à définir un volume de chargement thermiquement isolé de l'extérieur, dans lequel peuvent être transportées des marchandises sous des températures dirigées. De manière connue, la semi-remorque 12 comporte une installation frigorifique pour abaisser la température à l'intérieur du volume de chargement 28 par rapport à la température de l'air ambiant à l'extérieur de la carrosserie 11.

Le dispositif de partitionnement 10 permet de délimiter entre elles, à l'intérieur du volume de chargement 28 défini par la carrosserie frigorifique 11, des zones distinctes. Ces zones distinctes peuvent être maintenues à la même température ou à des températures différentes.

Le dispositif de partitionnement 10 est un dispositif de partitionnement longitudinal qui permet de séparer une zone avant 38 d'une zone arrière 40 dans le volume de chargement 28 de la carrosserie frigorifique 11. Pour ce faire, le dispositif de partitionnement 10 comporte au moins une cloison de partitionnement 42 ayant, au niveau d'un bord supérieur 44 de la cloison 42, un mécanisme d'ancrage 46 de la cloison 42 dans une multitude de positions longitudinales dans la carrosserie 11. La multitude de positions comprend aux moins deux positions longitudinales distinctes, et de préférence plus, avec des positions réparties sur une plage de postions qui de s'étend de préférence sur plusieurs mètres, éventuellement sur plus de 80 pourcents de la longueur du volume de chargement 28. La multitude de positions pourraient être constituée d'une infinité de positions contigües, avec un mécanisme d'ancrage à réglage continu. Cependant, dans la pratique, le mécanisme d'ancrage 46 permet d'ancrer le bord supérieur 44 dans l'une d'une série de plusieurs positions longitudinales discrètes, réparties, par exemple à intervalles réguliers, par exemple des intervalles de 5 centimètres ou d'une ou plusieurs dizaines de centimètres, sur une plage de postions qui s'étend de préférence sur plusieurs mètres.

De manière connue, la cloison de partitionnement 42 est escamotable par pivotement de la cloison 42 autour d'un axe supérieur transversal d'escamotage A46 entre une position de service, verticale (représentée sur la Figure 1), et une position relevée (non représentée). De préférence, la position relevée de la cloison 42 est sensiblement horizontale et sensiblement accolée au plafond 36. De préférence, le mécanisme d'ancrage 46 permet de maintenir la cloison 36 en position relevée. De préférence, le mécanisme d'ancrage 46 permet de maintenir la cloison 42 en position de service, verticale. De préférence, pour séparer efficacement d'un point de vue thermique les zones distinctes 38, 40 du volume de chargement 28, la cloison de partitionnement s'étend, en position de service sur toute la hauteur du volume de chargement 28 selon la direction verticale, et sur toute la largeur du volume de chargement selon la direction transversale. De préférence, la cloison de partitionnement est réalisée en matériaux isolants thermiquement.

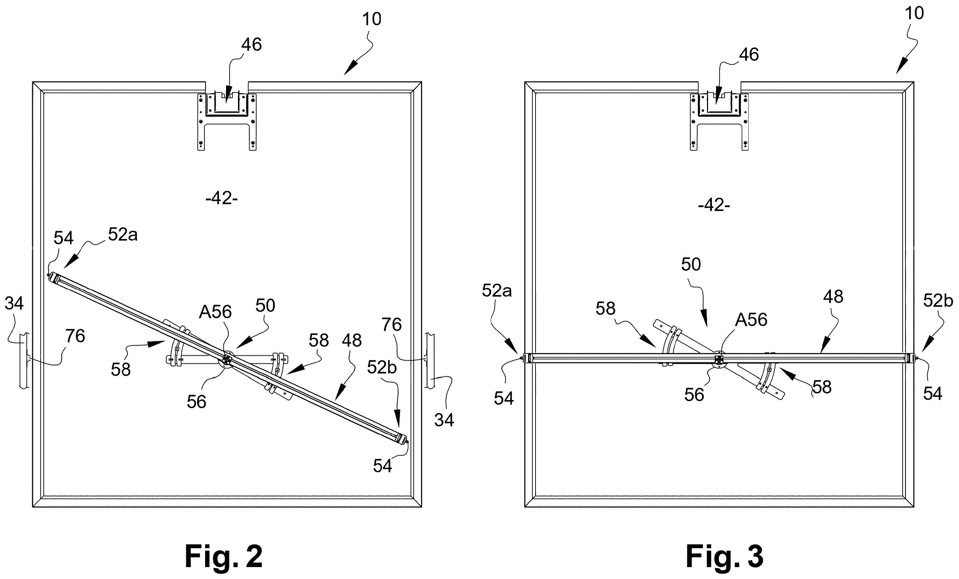

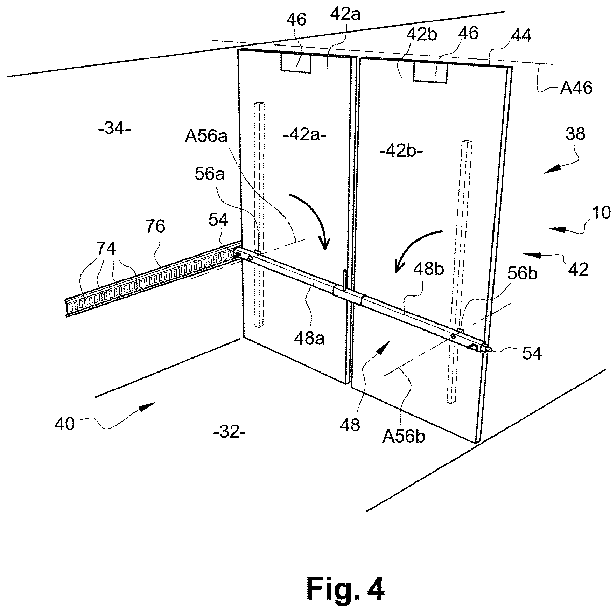

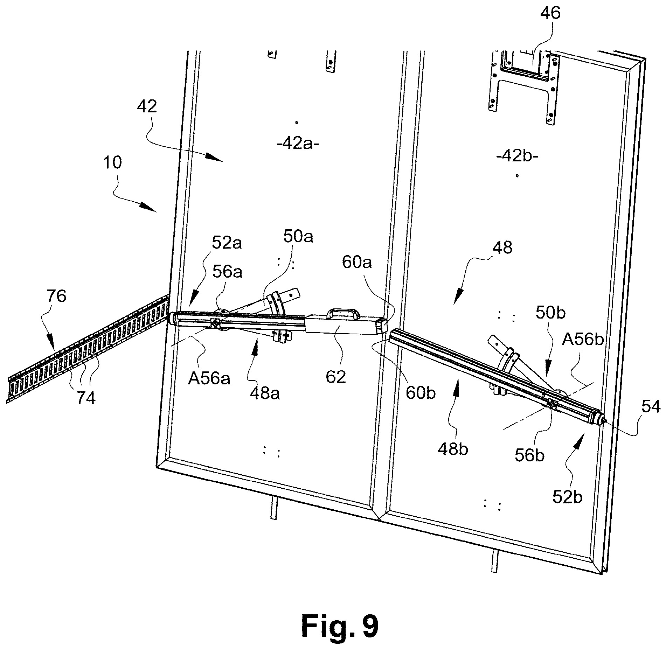

Dans certains modes de réalisation, tel que le premier mode de réalisation illustré aux Figures 2 et 3, la cloison de partitionnement 42 comporte un unique panneau qui s'étend sur toute la largeur du volume de chargement 28 selon la direction transversale. Cependant, dans d'autres modes de réalisation, tels que le deuxième et le troisième modes de réalisation illustrés respectivement aux Figures 4 à 8 et aux Figures 9 à 12, la cloison de partitionnement 42 comporte deux panneaux 42a, 42b juxtaposés transversalement, qui sont chacun escamotables indépendamment l'un de l'autre par pivotement autour de l'axe supérieur transversal d'escamotage A46 entre une position de service verticale et une position relevée.

Un exemple d'un mécanisme d'ancrage 46, pour une cloison à panneau unique 42, ou pour une cloison à deux panneaux 42a, 42b est par exemple décrit dans le document EP-3.825.180 auquel on se réfèrera utilement pour plus de détail. Le mécanisme d'ancrage 46 comporte par exemple, pour chaque panneau 42, 42a, 42b, un chariot qui est agencé au niveau du bord supérieure 44 du panneau et qui est configuré pour venir coulisser et se bloquer sur un rail longitudinal correspondant 47a, 47b fixé au plafond 36 de la carrosserie isotherme. Dans le cas illustré à la Figure 1 d'une cloison de partitionnement 42 à deux panneaux 42a, 42b juxtaposés, il est prévu deux rails longitudinaux 47a, 47b fixés au plafond 36 de la carrosserie isotherme, décalés l'un de l'autre selon la direction transversale pour être agencés sensiblement au niveau du milieu du panneau 42a, 42b correspondant selon la direction transversale. Le chariot du mécanisme d'ancrage 46 associé à chaque panneau comporte de préférence des moyens pour ancrer le panneau 42, 42a, 42b dans une multitude de positions longitudinales par rapport au rail correspondant 47a, 47b. Le chariot peut aussi comprendre des moyens de maintien du panneau en position relevée, voire aussi en position de service.

Selon un aspect, le dispositif de partitionnement 10 comporte une barre d'arrimage 48 qui est fixée sur la cloison 42 par un mécanisme de basculement 50 qui permet le déplacement de la barre d'arrimage entre une position de stockage et une position d'arrimage par rapport à la cloison. En fixant la barre d'arrimage 48, parfois appelée barre d'arrêt de chargement, sur la cloison de partitionnement, on s'assure qu'elle n'est jamais oublié. On verra aussi qu'elle participe au maintien en position de cloison de partitionnement 42 dans sa position de service verticale, à la position longitudinale réglée par le biais du mécanisme d'ancrage 46.

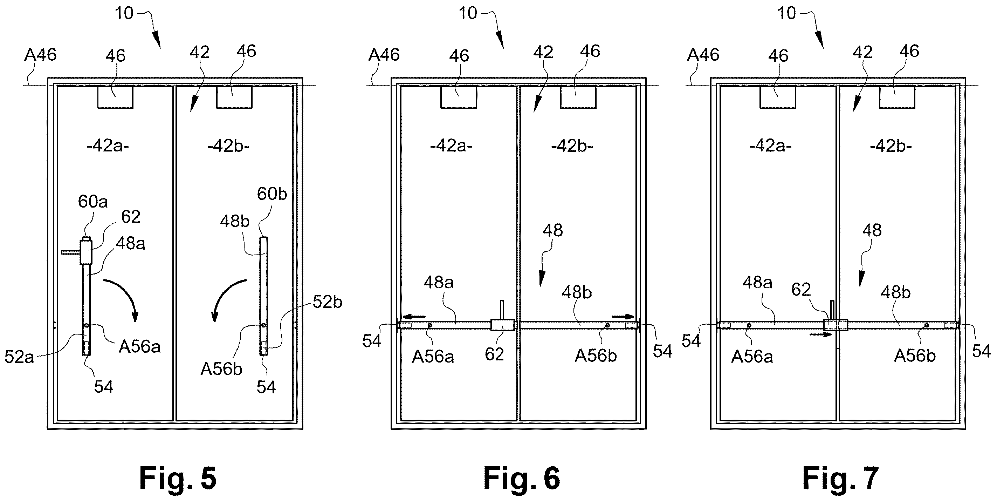

De préférence, comme illustré respectivement sur les Figures 3 et 7, la barre d'arrimage 48 est disposée, en position d'arrimage, de manière à ce que sa longueur s'étende selon la direction transversale, horizontale, en travers du volume de chargement 28. Tel que cela sera décrit plus en détail pour le deuxième et le troisième modes de réalisation, la barre d'arrimage 48 comporte deux extrémités d'arrimage 52a, 52b qui sont munies chacune d'un organe d'arrimage 54 pour arrimer l'extrémité d'arrimage 52a, 52b sur la paroi latérale 34 correspondante de la carrosserie frigorifique 11. On verra que cet arrimage de la barre d'arrimage 48 peut se faire sur des profilés longitudinaux 76 qui sont agencés sur les parois latérales, et que cette arrimage peut être effectué dans une position longitudinale dans le volume de chargement 28, qui correspond à la position longitudinale de la cloison de partitionnement fixée par le mécanisme d'ancrage 46.

En position d'arrimage, la barre d'arrimage 48 est de préférence agencée dans une moitié basse de la cloison 42, par exemple dans une zone de la cloison qui est comprise, en hauteur, depuis un bord inférieur de la cloison 42, entre 15 pourcents et 50 pourcents de la hauteur totale de la cloison, plus préférentiellement comprise entre 20 et 40 pourcents de la hauteur totale de la cloison.

En position d'arrimage, les organes d'arrimage 54 situés aux deux extrémités d'arrimage 52a, 52b de la barre d'arrimage 48 sont arrimés avec la paroi latérale 34 correspondante pour bloquer la barre d'arrimage dans cette position et pour permettre à la barre d'arrimage d'encaisser sans déplacements des efforts selon la direction longitudinale, efforts qui peuvent être significatifs et qui peuvent être appliqués sur la barre d'arrimage elle-même ou sur la cloison de partitionnement 42.

De préférence, la barre d'arrimage 48 est rectiligne entre ses deux extrémités d'arrimage 52a, 52b.

Dans un mode de réalisation à panneau unique, tel que le premier exemple illustré aux Figures 2 et 3, la barre d'arrimage 48 peut être réalisée sous la forme d'une barre pleine largeur, dont la longueur est sensiblement égale à la largeur du volume de chargement 28 selon la direction transversale. Dans un tel mode de réalisation, le mécanisme de basculement 50 détermine de préférence un déplacement de la barre d'arrimage 48, entre ses positions d'arrimage et de stockage, qui est parallèle à un plan général de la cloison 42. En position de stockage, la barre d'arrimage 48 est inclinée par rapport à l'horizontale d'un angle de stockage qui est compris dans la gamme allant de 15 degrés à 90 degrés. Dans le premier exemple de réalisation, on a représenté un angle de stockage de 25 degrés par rapport à la direction transversale horizontale.

Dans le premier exemple de réalisation, le déplacement de la barre d'arrimage 48, entre ses positions d'arrimage et de stockage, est un mouvement de pur rotation autour d'un axe de rotation A56 perpendiculaire à la cloison 42. Pour cela, le mécanisme de basculement 50 comporte une articulation 56 par laquelle la barre 48 est articulée sur la cloison autour de l'axe de rotation A56. Dans ce premier exemple l'articulation 56 est agencée au milieu de la longueur de la barre d'arrimage 48 et l'axe de rotation A56 est agencé au centre de la cloison 42 selon la direction transversale. Par ailleurs, l'axe de rotation A56 est de préférence agencé dans une moitié basse de la cloison 42, par exemple dans une zone de la cloison qui est comprise en hauteur, depuis un bord inférieur de la cloison 42, entre 15 pourcents et 50 pourcents de la hauteur totale de la cloison, plus préférentiellement comprise entre 20 et 40 pourcents de la hauteur totale de la cloison.

Dans le premier exemple et le troisième exemple de réalisation, le mécanisme de basculement 50 comporte au moins un point de liaison coulissant 58, qui est décalé de l'axe de rotation A56 de la barre 48, et qui, sans interférer avec la rotation de la barre d'arrimage 48, permet de lier la barre d'arrimage 48 à la cloison 42 selon la direction perpendiculaire à la cloison 42. Dans le premier exemple, le dispositif comporte deux points de liaisons coulissants 58 qui sont disposés chacun d'un côté de l'axe de rotation A56, de préférence à égale distance de l'axe de rotation A56. Chaque point de liaison coulissant 58 permet de reprendre des efforts qui tendraient à écarter la barre d'arrimage 48 de la cloison 42, notamment sous l'effet de l'application d'un effort longitudinal sur la cloison 42 lorsqu'elle est arrimée en position de service par la barre d'arrimage 48. Un tel point de liaison coulissant 58 sera décrit plus en détail en relation avec le troisième mode de réalisation.

Dans un mode de réalisation à plusieurs panneaux juxtaposés, on pourrait prévoir que la barre d'arrimage soit une barre d'arrimage de pleine largeur qui serait fixée, par un mécanisme de basculement approprié, sur un des panneaux. Dans un tel cas, on prévoira avantageusement que l'axe de rotation A56 de la barre 48, déterminé par l'articulation 56, soit décalé le long de la barre, par rapport au centre de celle-ci dans la direction de sa longueur de manière à être plus proche de l'une de ses extrémité latérale 52a, 52b que de l'autre.

Cependant, dans des modes de réalisation à plusieurs panneaux juxtaposés, tels que le deuxième exemple et le troisième exemple, la barre d'arrimage 48 est de préférence réalisée sous la forme d'une barre d'arrimage 48 en plusieurs parties, de préférence en autant de parties que de panneaux 42a, 42b. Ainsi, la barre d'arrimage 48 comporte, dans le deuxième et le troisième exemples, une première demi-barre 48a qui est fixée sur un premier 42a des deux panneaux, par un premier mécanisme de basculement 50a qui permet le déplacement de la première demi-barre 48a entre une position de stockage et une position d'arrimage par rapport au premier panneau 42a, et une deuxième demi-barre 48b qui est fixée sur le deuxième panneau 42b par un deuxième mécanisme de basculement 50b qui permet le déplacement de la deuxième demi-barre 48b entre une position de stockage et une position d'arrimage par rapport au deuxième panneau 42b. Dans les exemples, les deux demi-barres 48a, 48b et leur mécanisme de basculement respectifs 50a, 50b sont identiques et symétriques l'une de l'autre par rapport à un plan vertical et longitudinal médian du volume de chargement, du fait que dans, l'exemples les deux panneaux 42a, 42b de la paroi de cloisonnement sont de largeur identique selon la direction transversale. Pour le cas où les deux panneaux n'auraient pas la même largeur selon la direction transversale, on pourrait avoir des demi-barres de longueurs différentes, ou, en alternative des demi-barres de longueurs identiques.

Chaque demi-barre 48a, 48b comporte une extrémité médiale 60a, 60b, transversalement vers le centre du volume de chargement en position d'arrimage, et une extrémité latérale 52a, 52b, transversalement vers la paroi latérale correspondante de la carrosserie frigorifique 11. L'extrémité latérale 52a, 52b, de chaque demi barre 48a, 48b est munie d'un organe d'arrimage 54 sur la paroi latérale 34 correspondante de la carrosserie frigorifique. Ainsi, l'extrémité latérale 52a, 52b de chaque demi-barre forme une extrémité d'arrimage de la barre d'arrimage 48 prise dans son ensemble. Chaque demi-barre 48a, 48b est de préférence rectiligne entre son extrémité médiale 60a, 60b son extrémité latérale 52a, 52b. De préférence, lorsque chacune des demi-barres 48a, 48b formant la barre d'arrimage 48 est en position d'arrimage, elles sont alignées de manière rectiligne, de manière à former une barre d'arrimage 48 rectiligne.

Dans un mode de réalisation à plusieurs panneaux juxtaposés, le mécanisme de basculement 50a, 50b détermine un déplacement de chaque demi-barre 48a, 48b, entre ses positions d'arrimage et de stockage, qui est de préférence parallèle à un plan général du panneau 42a, 42b correspondant sur lequel elle est fixée par le mécanisme de basculement 50a, 50b.

Dans les exemples le mécanisme de basculement 50a, 50b d'une demi barre 48a, 48b comporte une articulation 56a, 56b par laquelle la demi-barre 48a, 48b est articulée sur le panneau correspondant 42a, 42b autour d'un axe de rotation A56a, A56b perpendiculaire au panneau correspondant.

En position d'arrimage, chaque demi-barre est de préférence horizontale. En position de stockage, chaque demi-barre 48a, 48b est de préférence inclinée par rapport à l'horizontale d'un angle de stockage qui est compris dans la gamme allant de 15 degrés à 90 degrés. Dans le deuxième exemple, on peut voir aux figures 4 et 5 que l'angle de stockage de chaque demi-barre est de 90 degrés. Dans le troisième exemple, il est prévu que l'angle de stockage de chaque demi-barre est de 25 degrés.

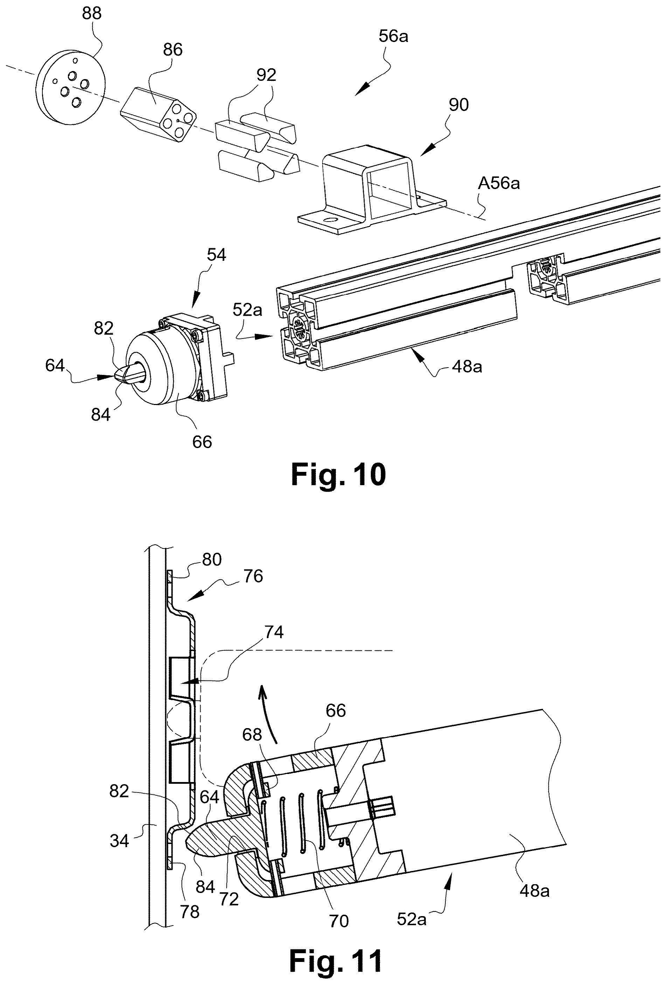

En position d'arrimage, les organes d'arrimage 54 situés à l'extrémités d'arrimage 52a, 52b de chacune des deux demi-barres 48a, 48b sont arrimés avec la paroi latérale 34 correspondante pour bloquer la barre dans cette position. Un mode de réalisation d'un point de liaison coulissant 58 est illustré plus en détail dans les Figures 10 et 11, plus particulièrement dans le cas d'une demi-barre 48a, 48b pour une cloison 42 à deux panneaux juxtaposés. Cependant, la même conception peut être utilisée dans le cas d'une barre d'arrimage 48 en une seule partie, pour une cloison à un seul panneau, comme illustré aux Figures 2 et 3.

Dans les exemples de réalisation illustrés, chaque organe d'arrimage 54 comporte un doigt coulissant 64 qui est illustré plus particulièrement sur les Figures 10 et 11. Comme on le voit sur ces figures, le doigt coulissant 64 est monté à l'extrémité latérale 52a, 52b de la demi-barre 48a, 48b et il s'étend et coulisse par rapport à la demi-barre 48a, 48b selon la direction d'élongation de la demi-barre 48a, 48b considérée, en étant sollicité transversalement vers l'extérieur, en direction de la paroi latérale 34 correspondant à l'extrémité latérale 52a, 52b considérée, vers une position saillante d'arrimage. Le doigt coulissant 64 peut ainsi coulisser entre une position rétractée déverrouillée et sa position saillante d'arrimage dans laquelle il est en saillie transversalement vers l'extérieur selon la direction d'élongation de la demi-barre 48a, 48b, pour coopérer avec des moyens d'arrimage 74, 76 de la paroi latérale 34 correspondante.

Dans l'exemple, l'organe d'arrimage 54 comprend une cartouche formant le boîtier 66, qui est montée à l'extrémité latérale 52a, 52b considérée de la demi-barre 48a, 48b. Le doigt coulissant 64 présente une embase 68 qui coulisse dans un logement délimité par la cartouche 66, tandis que le doigt coulissant 64 dépasse transversalement vers l'extérieur de la cartouche 66 au travers d'un orifice 72 tourné en direction de la paroi latérale 34 correspondant à cette extrémité latérale 52a, 52b. On peut prévoir un ressort de compression 70, logé dans le logement délimité par la cartouche 66, et en appui sur l'embase 68 du doigt coulissant 64 pour le solliciter vers l'extérieur vers sa position saillante d'arrimage.

Dans les exemples de réalisation, les parois latérales 34 de la carrosserie frigorifique 11 comprennent en tant que moyen d'arrimage, une série d'empreintes 74 dans lesquelles le doigt coulissant 64 peut être reçu lorsque la barre d'arrimage 48, ou la demi-barre 48a, 48b est en position d'arrimage. Chaque empreinte 74 est positionnée longitudinalement dans le volume de chargement 28 de manière à correspondre, au moins approximativement, à une position longitudinale de la cloison de partitionnement 42 déterminée par le mécanisme d'ancrage 46.

De manière connue dans le domaine des barres d'arrimage, ces empreintes 74 peuvent être formées sur un profilé longitudinal 76 fixé sur une surface interne de chacune des parois latérales 34 de la carrosserie 11. Le profilé longitudinal 76 est par exemple réalisé en métal, par exemple en tôle pliée et découpé. Deux profilés longitudinaux 76 sont donc agencés en vis-à-vis transversalement de part et d'autre du volume de chargement, chacun sur une surface interne d'une des parois latérales 34 de la carrosserie frigorifique 11, à la même hauteur que la barre d'arrimage 48 en position d'arrimage. Les empreintes 74 des deux profilés longitudinaux 76 sont agencés en correspondance selon la direction longitudinale, au sens qu'une empreinte 74 d'un des profilés longitudinaux 76 est agencée à la même position longitudinale, dans le volume de chargement 28, qu'une empreinte correspondante de l'autre des profilés longitudinaux 76.

De manière générale, les organes d'arrimages de la barre d'arrimage 48 sont configurés, avec les moyens d'arrimage correspondants de la carrosserie, pour au moins assurer un blocage de la barre d'arrimage selon la direction longitudinale apte à retenir des charges lors du déplacement du véhicule, et aptes à encaisser des efforts appliqués sur le dispositif de partitionnement lors du chargement et du déchargement.

Comme on peut le voir plus particulièrement sur la Figure 9 et sur la Figure 11, un exemple de profilé longitudinal 76 présente, dans un plan transversal vertical, un profil en chapeau de gendarme, dont les bords inférieurs et supérieurs forme des portions longitudinales inférieures et supérieures 78, 80 de fixation sur la paroi latérale 34, et dont une portion centrale, entre les portions longitudinales inférieures et supérieures 78, 80, est en relief transversalement vers le centre du volume de chargement par rapport à la surface interne de la paroi latérale 34 sur laquelle le profilé longitudinal 76 est fixé. Dans cette portion centrale, qui s'étend sur la longueur du profilé longitudinal 76, sont aménagées, à intervalles réguliers, les empreintes 74 destinées à accueillir le doigt coulissant 64. Les empreintes 74 sont par exemple formées par des découpes et des rabats de la tôle formant le profilé longitudinal 76.

Le doigt coulissant 64 et reçu dans une empreinte 74 pour former un pêne reçu dans une gâche, et pour bloquer la barre d'arrimage 48 ou la demi-barre 48a, 48b en position d'arrimage, au moins selon la direction longitudinale.

Dans l'exemple des Figures 10 et 11, le doigt coulissant 64 présente un pan incliné supérieur 82, qui, lorsque la demi-barre 48a, 48b arrive de sa position de stockage vers sa position d'arrimage, vient s'appuyer sur le bord inférieur de la portion centrale du rail longitudinale 76 pour provoquer, par effet de came, la rétractation automatique du doigt coulissant 64 vers l'intérieur de la cartouche 66, permettant à la demi-barre 48a, 48b d'atteindre sa position d'arrimage. Lorsque la demi-barre 48a, 48b a atteint sa position d'arrimage, le doigt coulissant 64 se trouve en regard d'une empreinte 74 dans laquelle il s'engage, sous l'effet du ressort 70, pour arrimer la demi-barre 48a, 48b en position d'arrimage. Ainsi, on obtient un arrimage automatique de la barre d'arrimage ou de la demi-barre en position d'arrimage.

Dans l'exemple des Figures 10 et 11, le doigt coulissant 64 présente un pan incliné inférieur 84, qui, lorsque la barre quitte sa position d'arrimage, par une manipulation de l'usager, provoque un désarrimage automatique de l'organe d'arrimage 54, permettant, au-delà d'un certain effort appliqué sur la barre d'arrimage 48 en rotation autour de l'axe de rotation A56a, A56b, d'escamoter automatiquement le doigt de verrouillage 64 à l'encontre du ressort 70, et donc de pivoter la demi-barre 48a, 48b vers sa position de stockage.

On note qu'un tel désarrimage automatique intervient uniquement lorsqu'on applique un effort de rotation sur la demi-barre 48a, 48b autour de l'axe de rotation A56a. Ce désarrimage automatique n'intervient pas lorsqu'on applique sur la barre 48 ou sur la cloison 42 un effort perpendiculaire à la cloison 42 en position de service. De la sorte, le désarrimage automatique de l'organe d'arrimage 54 ne diminue en rien la capacité de la barre d'arrimage 48 à encaisser sans déplacement des efforts selon la direction longitudinale, efforts qui peuvent être significatifs et qui peuvent être appliqués sur la barre d'arrimage 48 elle-même ou sur la cloison de partitionnement 42.

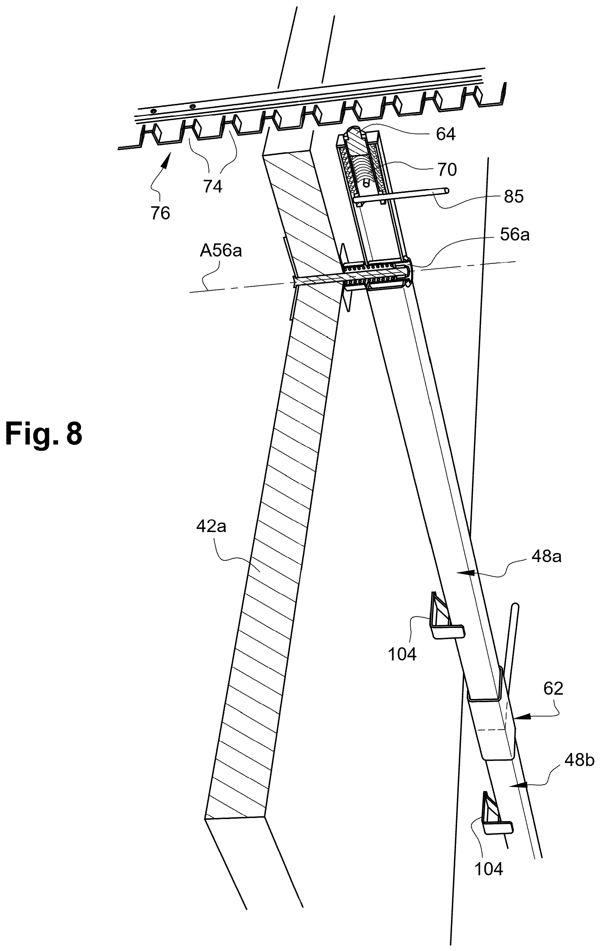

Cependant, un tel arrimage automatique ou un tel désarrimage automatique ne sont pas obligatoires. Dans le deuxième exemple de réalisation illustré plus particulièrement aux figures 4 et 8, l'organe d'arrimage 54 peut être désarrimé manuellement par l'utilisateur par une tirette 85 qui est prévu pour permettre de rétracter le doigt coulissant 64 à l'encontre du ressort de compression 70. Ce deuxième exemple de réalisation, par la présence du ressort de compression 70, permet cependant un arrimage automatique. Toutefois, on pourrait aussi prévoir que l'arrimage de l'organe d'arrimage 54 soit lui aussi manuel, par exemple avec un organe d'arrimage à doigt coulissant 64, dépourvu de ressort, mais permettant, grâce à la tirette 85, de déplacer le doigt coulissant 64 vers sa position saillante d'arrimage.

De préférence, le dispositif de partitionnement 10 comporte des moyens de verrouillage des extrémités médiales 60a, 60b des demi-barres 48a, 48b en position d'arrimage, ceci afin de verrouiller la rotation des demi-barres en position d'arrimage. Ces moyens de verrouillage pourraient comprendre des moyens de verrouillage, sur la cloison 42, de l'extrémité médiale 60a, 60b d'une demi-barre 48a, 48b considérée, par exemple en verrouillant l'extrémité médiale 60a, 60b sur le panneau 42a, 42b correspondant à cette demi-barre 48a, 48b considérée.

Cependant, dans les deux et troisièmes exemples, le dispositif comporte, en tant que moyens de verrouillage des extrémités médiales 60a, 60b, des moyens d'encastrement mutuel des extrémités médiales 60a, 60b des demi-barres 48a, 48b en position d'arrimage. En effet, dans ces modes de réalisation, les demi-barres 48a, 48b en position d'arrimage sont alignées et leurs extrémités médiales 60a, 60b se font face.

Dans ces deux exemples, les moyens d'encastrement mutuel comprennent un manchon d'encastrement 62 qui est monté à coulissement sur l'une des deux demi-barres, entre une position déverrouillée, illustrée par exemple sur les figures 5, 6 et 9, et une position de verrouillage illustrée sur les Figures 4 et 7.

Dans les exemples, chaque demi-barre 48a, 48b est réalisée sous la forme d'un profilé de section carrée, et le manchon d'encastrement 62 présente un profil interne de section carrée complémentaire, pour pouvoir coulisser le long de la demi-barre. Bien entendu, chaque demi-barre 48a, 48b pourrait avoir une section de forme autre que carrée. Le manchon n'a pas nécessairement une section de même forme, mais de préférence une section qui coulisse avec un jeu réduit sur les demi-barres. Dans les exemples, le manchon d'encastrement 62 est monté sur une première demi-barre 48a, et, en position déverrouillée, il est reçu entre l'extrémité latérale 52a et l'extrémité médiale 60a, laissant celle-ci apparente. Lorsque les deux demi-barres 48a, 48b sont amenés à leur position d'arrimage, tel qu'illustré à la figure 6 par exemple, un utilisateur peut alors provoquer le coulissement du manchon d'encastrement 62 vers sa position de verrouillage illustrée par exemple à la Figure 7. En position de verrouillage, le manchon d'encastrement 62 est reçu à cheval sur les deux extrémités médiales 60a, 60b en vis-à-vis des deux demi-barres, en étant encastré avec un jeu minimal sur ces deux extrémités. Une fois que les deux demi-barres sont réunies par le manchon d'encastrement 62, aucune d'elles ne peut plus pivoter autour de son axe de rotation A56a, A56b.

Dans certains modes de réalisation, on pourrait prévoir par exemple que l'axe de rotation A56a, A56b de la demi-barre 48a, 48b, déterminé par l'articulation 56a, 56b, soit situé au centre de la demi-barre dans la direction de sa longueur, de manière à avoir chaque demi-barre équilibrée par rapport à son axe de rotation A56a, A56b. Toutefois, dans d'autres modes de réalisation, tels qu'illustrés sur les figures, l'axe de rotation A56a, A56b de la demi-barre 48a, 48b, déterminé par l'articulation 56a, 56b, est décalé le long de la demi-barre, par rapport au centre de celle-ci, dans la direction de sa longueur, de manière à être plus proche de l'extrémité latérale 52a, 52b de la demi-barre que de son extrémité médiale 60a, 60b. Par exemple, l'axe de rotation A56a, A56b est décalé le long de la demi-barre de manière à être agencé à une distance de l'extrémité latérale 52a, 52b de la demi-barre qui est par exemple comprise dans la gamme allant de 10 pourcents à 40 pourcents de la longueur de la demi-barre 48a, 48b.

Une telle disposition présente deux avantages. Un premier avantage résulte du fait que cela procure, lors de la manipulation de la demi-barre 48a, 48b entre ses positions d'arrimage et de stockage, un effet de levier, lorsqu'on manipule la demi barre 48a, 48b par son extrémité médiale 60a, 60b, pour engager ou dégager l'organe d'arrimage 54 situé au niveau de l'extrémité latérale 52a ,52b.

Un deuxième avantage de ce décalage de l'axe de rotation A56a, A56b est obtenu en prévoyant que, comme dans les exemples de réalisation, dans la position de stockage, l'extrémité médiale 60a, 60b de la demi-barre considérée se trouve verticalement au-dessus du niveau de l'axe l'articulation A56a, A56b, tandis que l'extrémité latérale 52a, 52b de ladite demi-barre considérée se trouve verticalement en dessous du niveau de la désarticulation A56a, A56b. En effet, en partant de l'hypothèse que le centre de gravité de la demi-barre 48a, 48b est agencé proche du milieu de celle-ci dans la direction de sa longueur, on comprend donc que le décalage de l'axe de rotation A56a, A56b vers l'extrémité latérale 52a, 52b fait que la demi-barre présente un centre de gravité qui est plus proche de l'axe supérieur transversal d'escamotage A46 lorsque la demi-barre barre d'arrimage 48a, 48b est en position de stockage que lorsqu'elle est en position d'arrimage. En effet, le tronçon de la demi-barre 48a, 48b entre l'axe de rotation A56a, A56b et l'extrémité médiale 60a, 60b est plus long, donc plus lourd que le tronçon de la demi-barre 48a, 48b entre l'axe de rotation A56a, A56b et l'extrémité latérale 52a, 52b. Le tronçon le plus long se trouve donc, en position de stockage, au-dessus du niveau de l'articulation 56a, 56b. Or, un avantage d'avoir le centre de gravité de la demi-barre plus proche de l'axe supérieur transversal d'escamotage A46 est qu'il est plus facile de relever le panneau 42a, 42b vers la position relevée.

Dans certains modes de réalisation, notamment dans le premier mode de réalisation et le troisième mode de réalisation, le dispositif de partitionnement comporte un organe de rappel de la demi-barre 48a, 48b vers sa position de stockage. L'organe de rappel peut être un organe de rappel élastique, ou autre. Cela s'avère particulièrement utile pour le troisième mode de réalisation, lorsque l'axe de rotation A56a, A56b est décalé comme décrit ci-dessus, et que le centre de gravité, en position de stockage, se situe au-dessus de l'articulation 56a, 56b comme décrit ci-dessus. En effet, dans un tel cas, en l'absence d'organe de rappel élastique, la demi-barre 48a, 48b tendrait à revenir vers sa position d'arrimage sous l'effet de la gravité. Sur la Figure 10, on a illustré un exemple de réalisation d'un organe de rappel élastique, qui est dans ce cas intégré à l'articulation 56a, 56b, laquelle forme une articulation à un rappel élastique intégré vers la position de stockage. L'articulation 56a, 56b comporte un cylindre de section carrée de petite section 86, dont l'axe central forme l'axe de rotation A56a, A56b, solidaire d'une embase 88 permettant la fixation de l'articulation 56a, 56b sur la cloison 42. L'articulation 56a, 56b comporte encore un profil tubulaire cylindrique 90 de section carrée, creuse et de grande section. Le cylindre de section carrée de petite section 86 est reçu à l'intérieur du profil tubulaire cylindrique 90, les deux sections carrées étant décalées en rotation de 45 degrés autour de l'axe de rotation A56a. Quatre plots élastomères 92 sont interposés entre les deux pour les ramener dans cette position décalée à 45 degrés, qui correspond sensiblement à la position de stockage. Lorsqu'on l'amène la demi-barre 48a, 48b vers sa position d'arrimage, le profil tubulaire cylindrique 90 pivote autour de l'axe de rotation A56a par rapport au cylindre de section carrée 86, en écrasant les plots élastomères 92, générant ainsi une force de rappel. Bien entendu, d'autres organes de rappel peuvent être prévus, par exemple sous la forme d'un ressort angulaire autour de l'articulation 56a, 56b, ou encore sous la forme d'un vérin à gaz ou d'un ressort hélicoïdal de traction ou de compression interposé entre la demi-barre 48a, 48b et la cloison 42.

Dans le deuxième exemple de réalisation, on a prévu, comme illustré plus particulièrement à la figure 8, que l'articulation comporte une laxité selon l'axe de rotation A56a, A56b. Par exemple, l'articulation 56a, 56b comporte, entre la demi-barre 48a, 48b et la cloison 42, un jeu de ressorts permettant une laxité selon l'axe de rotation. Cette laxité est particulièrement utile lorsque la barre d'arrimage 48 est arrimée en position d'arrimage entre les deux parois latérales 34 de la carrosserie 11, au cas où un effort est appliqué sur la cloison 42. Cela peut arriver par exemple lors des opérations de chargement ou de déchargement. Dans ce cas, la laxité au niveau de l'articulation 56a, 56b permet de limiter les risques d'arrachement de l'articulation 56a, 56b par rapport à la cloison 42, en permettant un léger déplacement de la cloison 42 par rapport à la barre d'arrimage 48. Une telle laxité selon une direction perpendiculaire à la cloison peut aussi être prévue dans le cadre du premier mode de réalisation comportant un unique panneau 42 et une barre d'arrimage 48 en une seule partie

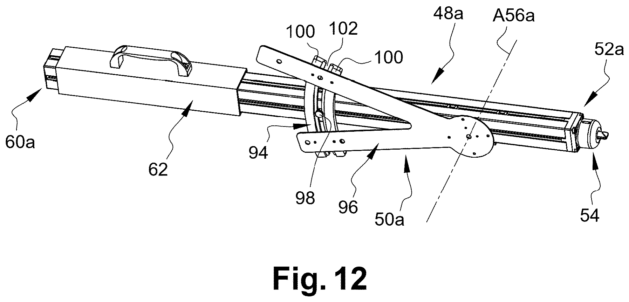

Dans le troisième exemple de réalisation, de manière similaire au premier exemple de réalisation, le mécanisme de basculement 50a, 50b d'une demi barre d'arrimage 48a, 48b comporte au moins un point de liaison coulissant 58, décalé de l'axe de rotation A56a, A56b de la demi-barre 48a, 48b et qui, sans interférer avec la rotation de la demi barre d'arrimage 48a, 48b autour de l'axe de rotation A56a, A56b, permet de lier la demi barre d'arrimage 48a, 48b à la cloison 42 selon la direction perpendiculaire à la cloison 42. Un mode de réalisation d'un point de liaison coulissant 58 est illustré, plus particulièrement dans le cas d'une demi-barre pour une cloison 42 à deux panneaux juxtaposés, sur la Figure 12. Cependant, la même conception peut être utilisée dans le cas d'une barre d'arrimage 48 en une seule partie, pour une cloison à un seul panneau, comme illustré aux Figures 2 et 3.

Sur la Figure 12, on voit que le mécanisme de basculement 50a comporte une glissière 94 en arc de cercle autour de l'axe de rotation A56a. La figure 12 représente uniquement une demi-barre 48a et son mécanisme de basculement 50a, avec un angle de vue opposé à celui de Figure 9, comme vu par transparence au travers de la cloison 42, celle-ci n'étant pas illustrée sur cette figure. La glissière 94 s'étend sur un arc de cercle qui est de préférence au moins égal à l'angle entre les positions de stockage et d'arrimage de la barre d'arrimage 48a, 48b. Dans l'exemple de la Figure 12, la glissière 94 est solidaire de la cloison 42. Elle est par exemple fixée sur une embase 96 du mécanisme de basculement 50a, dont on voit ici une face de fixation sur le panneau 42a de la cloison 42. Le mécanisme de basculement 50a comporte par ailleurs une griffe 98 qui est retenue par la glissière 94 selon au moins un sens dans la direction perpendiculaire au panneau, donc la direction de l'axe de rotation A56a, A56b, mais qui peut coulisser dans la glissière 94 selon l'arc de cercle autour de l'axe de rotation A56a, A56b. Dans l'exemple, la griffe 98 est solidaire et fixe par rapport à la demi-barre. On pourrait prévoir que la glissière soit solidaire de la demi-barre 48a, 48b, tandis que la griffe serait solidaire du panneau 42a, 42b. La griffe 98 empêche la barre d'arrimage 48a, 48b de s'écarter de la glissière 94 selon la direction perpendiculaire à la cloison 42. Elle évite ainsi que soit appliqué, sur l'articulation 56a, 56b, un couple autour d'un axe perpendiculaire à l'axe de rotation A56a, A56b qui provoquerait une tendance à l'arrachement de l'articulation 56a, 56b.

Dans l'exemple, la glissière comporte deux rails parallèles 100 en arc de cercle autour de l'axe de rotation A56a, séparés par une lumière 102. La griffe 98 se présente sous la forme d'un pion cylindrique qui s'étend perpendiculairement à la cloison depuis la demi-barre 48a, 48b, en direction de la cloison 42, et qui s'étend au travers de la lumière entre les deux rails. La griffe 98 comporte une tête élargie qui prend appui sur une face des rails tournée à l'opposé de la demi-barre 48a, 48b. La tête élargie, visible sur la Figure 12, empêche que la griffe 98 ne puisse être retirée d'entre les deux rails 100 selon la direction perpendiculairement à la cloison, dans le sens de l'écartement de la demi-barre 48a, 48b par rapport à la cloison 42.

On remarque que le point de liaison coulissant 58 empêche la barre d'arrimage 48a, 48b de s'écarter de la glissière 94 selon la direction perpendiculaire à la cloison 42 quelle que soit la position de la barre d'arrimage 48a, 48b entre ses positions de stockage et d'arrimage. En variante, on pourrait prévoir que le dispositif comporte, sur au moins un panneau, une organe d'accrochage décalé de l'axe de rotation de la demi-barre correspondante, et sur lequel la demi-barre 48a, 48b viendrait s'accrocher en position d'arrimage pour solidariser la demi barre avec l'organe d'accrochage selon la direction perpendiculaire au panneau. Un tel organe d'accrochage peut se présenter par exemple sous la forme d'un crochet ou d'une potence, dont un bras distal s'étend parallèlement à la cloison de telle sorte que la demi-barre 48a, 48b vienne, en position d'arrimage, se retrouver calée, selon la direction perpendiculaire au panneau, entre la cloison 42 et le bras distal de l'organe d'accrochage. Un tel organe d'accrochage assure la même fonction que le point de liaison glissant 58 décrit ci-dessus, mais uniquement dans la position d'arrimage, dans laquelle la fonction anti-arrachement est la plus utile.

Dans le deuxième exemple de réalisation, on peut voir notamment à la figure 8 que le dispositif comporte, sur au moins un panneau, une butée 104 qui est décalée de l'axe de rotation de la demi-barre correspondante, et sur lequel la demi-barre 48a, 48b vient s'appuyer en position d'arrimage pour bloquer la rotation de la demi barre en rotation autour de l'axe de rotation A56a, A56b, formant ainsi une butée angulaire pour la demi-barre 48a, 48b. Dans l'exemple illustré, la butée 104 forme également un cale d'écartement qui garantit, en position d'arrimage, un écartement prédéfini entre la cloison 42 et la demi-barre 48a, 48b, selon la direction perpendiculaire au panneau 42a, 42b. Une telle butée 104 peut aisément être transformée en organe d'accrochage tel que décrit plus haut, en la réalisant sous la forme d'un crochet ou d'une potence ayant un bras distal parallèle à la cloison.

## Revendications

1. Dispositif (10) de partitionnement longitudinal pour une carrosserie frigorifique (11), du type comportant au moins une cloison de partitionnement (42, 42a, 42b) ayant, au niveau d'un bord supérieur (44) de la cloison (42, 42a, 42b), un mécanisme d'ancrage (46) de la cloison (42, 42a, 42b) dans une multitude de positions longitudinales dans la carrosserie (11), et la cloison étant escamotable par pivotement de la cloison (42) autour d'un axe supérieur transversal d'escamotage (A46) entre une position de service verticale et une position relevée, **caractérisé en ce que** le dispositif comporte une barre d'arrimage (48, 48a, 48b) qui est fixée sur la cloison (42, 42a, 42b) par un mécanisme de basculement (50, 50a, 50b) qui permet le déplacement de la barre d'arrimage (48, 48a, 48b) entre une position de stockage et une position d'arrimage par rapport à la cloison (42, 42a, 42b).

2. Dispositif de partitionnement selon la revendication 1, **caractérisé en ce que** le mécanisme de basculement détermine un déplacement de la barre d'arrimage (48, 48a, 48b), entre ses positions d'arrimage et de stockage, qui est parallèle à un plan général de la cloison (42, 42a, 42b).

3. Dispositif de partitionnement, selon l'une quelconque des revendications 1 ou 2, **caractérisé en ce que**, en position d'arrimage, la barre d'arrimage (48, 48a, 48b) est horizontale, et **en ce que**, en position de stockage, la barre d'arrimage (48, 48a, 48b) est inclinée par rapport à l'horizontale d'un angle de stockage qui est compris dans la gamme allant de 15 degrés à 90 degrés.

4. Dispositif de partitionnement selon l'une quelconque des revendications précédentes, **caractérisé en ce que** le mécanisme de basculement comporte une articulation par laquelle la barre d'arrimage (48) est articulée sur la cloison (42) autour d'un axe de rotation perpendiculaire à la cloison (42).

5. Dispositif de partitionnement selon la revendication 4, **caractérisé en ce que** le mécanisme de basculement (50) comporte au moins un point de liaison coulissant (58) entre la barre d'arrimage (48, 48a, 48b) et la cloison (42), décalé de l'axe de rotation de la barre (48).

6. Dispositif de partitionnement selon l'une quelconque des revendications précédentes, **caractérisé en ce que** la cloison comporte deux panneaux (42a, 42b) juxtaposés transversalement, qui sont chacun escamotables indépendamment l'un de l'autre par pivotement autour de l'axe supérieur transversal d'escamotage (A46) entre une position de service verticale et une position relevée, **en ce que** la barre d'arrimage (48) comporte une première demi-barre (48a) qui est fixée sur un premier des deux panneaux (42a) par un premier mécanisme de basculement (50a) qui permet le déplacement de la première demi-barre (48a) entre une position de stockage et une position d'arrimage par rapport au premier panneau (42a), et une deuxième demi-barre (48b) qui est fixée sur le deuxième panneau (42b) par un deuxième mécanisme de basculement (50b) qui permet le déplacement de la deuxième demi-barre (48b) entre une position de stockage et une position d'arrimage par rapport au deuxième panneau (42b), **en ce que** chaque demi-barre (48a, 48b) comporte une extrémité médiale (60a, 60b) et une extrémité latérale (52a, 52b), l'extrémité latérale (52a, 52b) étant munie d'un organe d'arrimage (54) sur une paroi latérale (34) de la carrosserie frigorifique (11), l'extrémité latérale (52a, 52b) formant une extrémité d'arrimage de la barre d'arrimage (48).

7. Dispositif de partitionnement selon la revendication 6, **caractérisé en ce que** le mécanisme de basculement (50a, 50b) d'une demi barre (48a, 48b) détermine un déplacement de la demi-barre (48a, 48b), entre ses positions d'arrimage et de stockage, qui est parallèle à un plan général du panneau (42a, 42b) correspondant.

8. Dispositif de partitionnement selon l'une quelconque des revendications 6 ou 7, **caractérisé en ce que** le mécanisme de basculement (50a, 50b) d'une demi barre (48a, 48b) comporte une articulation (46a, 46b) par laquelle la demi-barre (48a, 48b) est articulée sur le panneau (42a, 42b) correspondant autour d'un axe de rotation (A56a, A56b) perpendiculaire au panneau (42a, 42b) correspondant.

9. Dispositif de partitionnement selon l'une quelconque des revendications 6 à 8, **caractérisé en ce que** le mécanisme de basculement (50a, 50b) d'une demi barre (48a, 48b) comporte au moins un point de liaison coulissant (58) entre la demi-barre (48a, 48b) et le panneau (42a, 42b) correspondant de la cloison (42).

10. Dispositif de partitionnement selon l'une quelconque des revendications 6 à 9, **caractérisé en ce que** la demi-barre (48a, 48b) présente un centre de gravité qui est plus proche de l'axe supérieur transversal d'escamotage (A46) lorsque la demi-barre (48a, 48b) est en position de stockage que lorsqu'elle est en position d'arrimage.

11. Dispositif de partitionnement selon l'une quelconque des revendications 6 à 10 en combinaison avec la revendication 8, **caractérisé en ce que** l'axe de rotation (A56a, A56b) de la demi-barre (48a, 48b) est décalé le long de la demi-barre (48a, 48b) en direction d'une extrémité latérale (52a, 52b) de la demi-barre (48a, 48b).

12. Dispositif de partitionnement selon l'une quelconque des revendications 6 à 11, **caractérisé en ce que** le dispositif (10) comporte des moyens de verrouillage (62) des extrémités médiales (60a, 60b) des demi-barres (48a, 48b) en position d'arrimage, verrouillant la rotation des demi-barres (48a, 48b) en position d'arrimage.

13. Dispositif de partitionnement selon l'une quelconque des revendications 6 à 12, **caractérisé en ce que** le dispositif comporte un organe de rappel de la demi-barre (48a, 48b) vers sa position de stockage.

14. Carrosserie frigorifique, **caractérisée en ce qu'**elle comprend au moins un dispositif de partitionnement selon l'une des revendications précédentes.

15. Remorque pour un véhicule automobile, la remorque comportant une caisse frigorifique ayant au moins un dispositif de partitionnement selon l'une des revendications 1 à 13.

## Patentansprüche

1. Längstrennvorrichtung (10) für einen Kühlaufbau (11), vom Typ, der mindestens eine Trennwand (42, 42a, 42b) aufweist, die an einer Oberkante (44) der Trennwand (42, 42a, 42b) einen Verankerungsmechanismus (46) der Trennwand (42, 42a, 42b) in einer Vielzahl von Längspositionen in dem Aufbau (11) aufweist, wobei die Trennwand durch Schwenken der Trennwand (42) um eine obere Quereinklappachse (A46) zwischen einer senkrechten Betriebsposition und einer hochgestellten Position versenkbar ist, **dadurch gekennzeichnet, dass** die Vorrichtung eine an der Trennwand (42, 42a, 42b) befestigte Zurrstange (48, 48a, 48b) aufweist, die durch einen Kippmechanismus (50, 50a, 50b) das Verschieben der Zurrstange (48, 48a, 48b) zwischen einer Lagerposition und einer Verzurrposition in Bezug auf die Trennwand (42, 42a, 42b) ermöglicht.

2. Trennvorrichtung nach Anspruch 1, **dadurch gekennzeichnet, dass** der Kippmechanismus eine Verschiebung der Zurrstange (48, 48a, 48b), zwischen seinen Verzurr- und Lagerpositionen, bestimmt, die parallel zu einer Gesamtebene der Trennwand (42, 42a, 42b) verläuft.

3. Trennvorrichtung nach einem der Ansprüche 1 oder 2, **dadurch gekennzeichnet, dass** die Zurrstange (48, 48a, 48b) in der Verzurrposition waagerecht ist, und dass die Zurrstange (48, 48a, 48b) in der Lagerposition gegenüber der Horizontalen um einen Lagerwinkel geneigt ist, der im Bereich von 15 Grad bis 90 Grad liegt.

4. Trennvorrichtung nach einem der vorhergehenden Ansprüche, **dadurch gekennzeichnet, dass** der Kippmechanismus ein Gelenk aufweist, durch das die Zurrstange (48) an der Trennwand (42) um eine Drehachse senkrecht zu der Trennwand (42) gelenkig gelagert ist.

5. Trennvorrichtung nach Anspruch 4, **dadurch gekennzeichnet, dass** der Kippmechanismus (50) mindestens einen von der Drehachse der Stange (48) versetzten verschiebbaren Verbindungspunkt (58) zwischen der Zurrstange (48, 48a, 48b) und der Trennwand (42) aufweist.

6. Trennvorrichtung nach einem der vorhergehenden Ansprüche, **dadurch gekennzeichnet, dass** die Trennwand zwei quer nebeneinander liegende Paneele (42a, 42b) aufweist, die jeweils unabhängig voneinander durch Schwenken um die obere Quereinklappachse (A46) zwischen einer vertikalen Betriebsposition und einer angehobenen Position versenkbar sind, wobei die Zurrstange (48) eine erste halbe Stange (48a) aufweist, die an einer der ersten der beiden Paneele (42a) durch einen ersten Kippmechanismus (50a) befestigt ist, der das Bewegen der ersten halben Stange (48a) zwischen einer Lagerposition und einer Verzurrposition in Bezug auf das erste Paneel (42a) ermöglicht, und eine zweite halbe Stange (48b), die an dem zweiten Paneel (42b) durch einen zweiten Kippmechanismus (50b) befestigt ist, der das Bewegen der zweiten halben Stange (48b) zwischen einer Lagerposition und einer Verzurrposition in Bezug auf das zweite Paneel (42b) ermöglicht, wobei jede halbe Stange (48a, 48b) ein mediales Ende (60a, 60b) und ein seitliches Ende (52a, 52b) aufweist, wobei das seitliche Ende (52a, 52b) mit einem Zurrelement (54) an einer Seitenwand (34) des Kühlaufbaus (11) versehen ist, wobei das seitliche Ende (52a, 52b) ein Zurrende der Zurrstange (48) bildet.

7. Trennvorrichtung nach Anspruch 6, **dadurch gekennzeichnet, dass** der Kippmechanismus (50a, 50b) einer halben Stange (48a, 48b) eine Verschiebung der halben Stange (48a, 48b) zwischen seinen Verzurr- und Lagerpositionen bestimmt, die parallel zu einer Gesamtebene des entsprechenden Paneels (42a, 42b) verläuft.

8. Trennvorrichtung nach einem der Ansprüche 6 oder 7, **dadurch gekennzeichnet, dass** der Kippmechanismus (50a, 50b) einer halben Stange (48a, 48b) ein Gelenk (46a, 46b) aufweist, wobei die halbe Stange (48a, 48b) an dem entsprechenden Paneel (42a, 42b) um eine Drehachse (A56a, A56b) senkrecht zu dem entsprechenden Paneel (42a, 42b) gelenkt ist.

9. Trennvorrichtung nach einem der Ansprüche 6 bis 8, **dadurch gekennzeichnet, dass** der Kippmechanismus (50a, 50b) einer halben Stange (48a, 48b) mindestens einen gleitenden Verbindungspunkt (58) zwischen der halben Stange (48a, 48b) und dem entsprechenden Paneel (42a, 42b) der Trennwand (42) aufweist.

10. Trennvorrichtung nach einem der Ansprüche 6 bis 9, **dadurch gekennzeichnet, dass** die halbe Stange (48a, 48b) einen Schwerpunkt besitzt, der näher an der oberen Quereinklappachse (A46) liegt, wenn sich die halbe Stange (48a, 48b) in der Lagerposition befindet, als wenn sie sich in der Verzurrposition befindet.

11. Trennvorrichtung nach einem der Ansprüche 6 bis 10 in Kombination mit Anspruch 8, **dadurch gekennzeichnet, dass** die Drehachse (A56a, A56b) der halben Stange (48a, 48b) entlang der halben Stange (48a, 48b) in Richtung eines seitlichen Endes (52a, 52b) der halben Stange (48a, 48b) versetzt ist.

12. Trennvorrichtung nach einem der Ansprüche 6 bis 11, **dadurch gekennzeichnet, dass** die Vorrichtung (10) Mittel zur Verriegelung (62) der medialen Enden (60a, 60b) der halben Stangen (48a, 48b) in der Verzurrposition aufweist, wodurch die Drehung der halben Stangen (48a, 48b) in der Verzurrposition verriegelt wird.

13. Trennvorrichtung nach einem der Ansprüche 6 bis 12, **dadurch gekennzeichnet, dass** die Vorrichtung ein Rückstellelement der halben Stange (48a, 48b) in seine Lagerposition aufweist.

14. Kühlaufbau, **dadurch gekennzeichnet, dass** er mindestens eine Trennvorrichtung nach einem der vorhergehenden Ansprüche umfasst.

15. Kraftfahrzeuganhänger, wobei der Anhänger einen Kühlkoffer mit mindestens einer Trennvorrichtung nach einem der Ansprüche 1 bis 13 aufweist.

## Claims

1. A longitudinal partitioning device (10) for a refrigerated body (11), of the type including at least one partition wall (42, 42a, 42b) having, at an upper edge (44) of the partition wall (42, 42a, 42b), an anchoring mechanism (46) for anchoring the partition wall (42, 42a, 42b) in a plurality of longitudinal positions within the body (11), and the partition wall being retractable by pivoting the partition wall (42) about an upper transverse retraction axis (A46) between a vertical service position and a raised position, **characterized in that** the device includes a lashing bar (48, 48a, 48b) which is fixed to the partition wall (42, 42a, 42b) by a tilting mechanism (50, 50a, 50b) allowing movement of the lashing bar (48, 48a, 48b) between a storage position and a lashing position relative to the partition wall (42, 42a, 42b).

2. The partitioning device according to claim 1, **characterized in that** the tilting mechanism defines a movement of the lashing bar (48, 48a, 48b) between its lashing and storage positions, which is parallel to a general plane of the partition wall (42, 42a, 42b).

3. The partitioning device according to any one of claims 1 or 2, **characterized in that**, in the lashing position, the lashing bar (48, 48a, 48b) is horizontal, and **in that**, in the storage position, the lashing bar (48, 48a, 48b) is inclined relative to the horizontal by a storage angle comprised in the range from 15 degrees to 90 degrees.

4. The partitioning device according to any one of the preceding claims, **characterized in that** the tilting mechanism includes a hinge by means of which the lashing bar (48) is articulated to the partition wall (42) about a rotation axis perpendicular to the partition wall (42).

5. The partitioning device according to claim 4, **characterized in that** the tilting mechanism (50) includes at least one sliding connection point (58) between the lashing bar (48, 48a, 48b) and the partition wall (42), offset from the rotation axis of the bar (48).

6. The partitioning device according to any one of the preceding claims, **characterized in that** the partition wall includes two panels (42a, 42b) arranged side by side transversely, each being retractable independently of the other by pivoting about the upper transverse retraction axis (A46) between a vertical service position and a raised position, **in that** the lashing bar (48) includes a first half-bar (48a) which is fixed to a first one of the two panels (42a) by a first tilting mechanism (50a) allowing the movement of the first half-bar (48a) between a storage position and a lashing position relative to the first panel (42a), and a second half-bar (48b) which is fixed to the second panel (42b) by a second tilting mechanism (50b) allowing the movement of the second half-bar (48b) between a storage position and a lashing position relative to the second panel (42b), **in that** each half-bar (48a, 48b) includes a medial end (60a, 60b) and a lateral end (52a, 52b), the lateral end (52a, 52b) being provided with a lashing device (54) on a side wall (34) of the refrigerated body (11), the lateral end (52a, 52b) forming a lashing end of the lashing bar (48).

7. The partitioning device according to claim 6, **characterized in that** the tilting mechanism (50a, 50b) of a half-bar (48a, 48b) defines a displacement of the half-bar (48a, 48b), between its lashing and storage positions, which is parallel to a general plane of the corresponding panel (42a, 42b).

8. The partitioning device according to any one of claims 6 or 7, **characterized in that** the tilting mechanism (50a, 50b) of a half-bar (48a, 48b) includes a hinge (46a, 46b) by means of which the half-bar (48a, 48b) is articulated to the corresponding panel (42a, 42b) about a rotation axis (A56a, A56b) perpendicular to the corresponding panel (42a, 42b).

9. The partitioning device according to any one of claims 6 to 8, **characterized in that** the tilting mechanism (50a, 50b) of a half-bar (48a, 48b) includes at least one sliding connection point (58) between the half-bar (48a, 48b) and the corresponding panel (42a, 42b) of the partition wall (42).

10. The partitioning device according to any one of claims 6 to 9, **characterized in that** the half-bar (48a, 48b) has a center of gravity which is closer to the upper transverse retraction axis (A46) when the half-bar (48a, 48b) is in the storage position than when it is in the lashing position.

11. The partitioning device according to any one of claims 6 to 10 in combination with claim 8, **characterized in that** the rotation axis (A56a, A56b) of the half-bar (48a, 48b) is offset along the half-bar (48a, 48b) towards a lateral end (52a, 52b) of the half-bar (48a, 48b).

12. The partitioning device according to any one of claims 6 to 11, **characterized in that** the device (10) includes locking means (62) for locking the medial ends (60a, 60b) of the half-bars (48a, 48b) in the lashing position, thereby locking the rotation of the half-bars (48a, 48b) in the lashing position.

13. The partitioning device according to any one of claims 6 to 12, **characterized in that** the device includes a return member for returning the half-bar (48a, 48b) to its storage position.

14. A refrigerated body, **characterized in that** it comprises at least one partitioning device according to any of the preceding claims.

15. A trailer for a motor vehicle, the trailer including a refrigerated body having at least one partitioning device according to any of claims 1 to 13.
